(19) Europäisches Patentamt
European Patent Office
Office européen des brevets

(11) **EP 4 517 698 A1**

(12) **EUROPEAN PATENT APPLICATION**

(43) Date of publication:
**05.03.2025 Bulletin 2025/10**

(21) Application number: **24191128.8**

(22) Date of filing: **26.07.2024**

(51) International Patent Classification (IPC):
*G06V 20/58* (2022.01)     *G06V 10/26* (2022.01)

(52) Cooperative Patent Classification (CPC):
**G06V 20/58; G06V 10/273**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.08.2023 JP 2023137743**

(71) Applicant: **FUJITSU LIMITED**
**Kawasaki-shi, Kanagawa 211-8588 (JP)**

(72) Inventor: **KANETAKE, Jun**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **MOVING OBJECT INFORMATION CALCULATION METHOD, MOVING OBJECT INFORMATION CALCULATION PROGRAM AND MOVING OBJECT INFORMATION CALCULATION APPARATUS**

(57) A moving object information calculation method for a computer to execute a process includes: acquiring a first captured image captured from a first moving object; detecting a second moving object from the first captured image; detecting a shielded region that is imaged below a road region in the first captured image; determining whether a predetermined condition that indicates that at least a part of a lower side of a circumscribed rectangle that circumscribes the detected second moving object and the shielded region overlap or are close to each other is satisfied based on the second moving object and the shielded region; and in a case where the predetermined condition is not satisfied, calculating a distance between the first moving object and the second moving object based on coordinates of a reference point over the lower side, and in a case where the predetermined condition is satisfied, skipping calculating the distance.

FIG. 1

## Description

FIELD

Embodiments discussed herein are related to a moving object information calculation method, a moving object information calculation program and a moving object information calculation apparatus.

BACKGROUND

A distance between a certain vehicle and another vehicle may be calculated from an image captured by a camera installed in the certain vehicle. For example, a distance is calculated when a position or a speed of an accident counterpart vehicle is calculated from an image of a front side or a rear side of a host vehicle captured by a vehicle-mounted camera of the host vehicle. The calculation of the distance may be performed based on a positional relationship between a position of the camera of the host vehicle and a reference point of a lower side of a circumscribed rectangle (may also be referred to as a bounding box) circumscribing another vehicle. When the circumscribed rectangle surrounds the entire vehicle, since the lower side of the circumscribed rectangle is in contact with a road surface, a height may be regarded as 0, and thus the reference point of the lower side of the circumscribed rectangle is used to calculate the distance.

A technique has been proposed in the related art in which a tracking target object included in a captured image is recognized as a tracking region, and it is determined whether to cancel tracking when the tracking target object is hidden by an obstacle or the like, based on an existence degree of a region including a movement in the tracking region.

Citation List

Patent Literature

[PTL 1] Japanese Laid-open Patent Publication No. 2016-85487 is disclosed as related art.

TECHNICAL PROBLEM

As described above, in a case where the distance is calculated by using the reference point of the lower side of the circumscribed rectangle, when the lower side is not appropriately detected, an error may occur in the calculated distance. For example, when a target vehicle is at a close distance from the host vehicle, a lower portion of the target vehicle may be shielded by a part (such as a hood or a dashboard) of the host vehicle in the captured image. In this case, since the shielded lower portion of the target vehicle is not included in the circumscribed rectangle that circumscribes a portion detected as the vehicle, the lower side of the circumscribed rectangle may not be in contact with the road surface. An error may occur in the distance calculated by using such a reference point of the lower side.

In one aspect, an object of the present disclosure is to provide a moving object information calculation method and a computer-readable recording medium storing a moving object information calculation program capable of suppressing calculation of an incorrect distance.

SOLUTION TO PROBLEM

In an aspect of the embodiments, a moving object information calculation method for a computer to execute a process, the process includes: acquiring a first captured image captured by a camera installed in a first moving object; detecting a second moving object from the first captured image; detecting a shielded region that is imaged below a road region in the first captured image and shields a part of the road region; determining whether a predetermined condition that indicates that at least a part of a lower side of a circumscribed rectangle that circumscribes the detected second moving object and the shielded region overlap or are close to each other is satisfied based on detection results of the second moving object and the shielded region; and in a case where the predetermined condition is not satisfied, calculating a distance between the first moving object and the second moving object based on coordinates of a reference point over the lower side, and in a case where the predetermined condition is satisfied, skipping calculation processing of the distance.

ADVANTAGEOUS EFFECTS OF INVENTION

In one aspect, it is possible to suppress calculation of an incorrect distance.

BRIEF DESCRIPTION OF DRAWINGS

FIG. 1 is a diagram illustrating a configuration example and a processing example of an image processing system according to a first embodiment;
FIG. 2 is a diagram illustrating a configuration example of an image processing system according to a second embodiment;
FIG. 3 is a diagram illustrating a detection example of a target vehicle;
FIG. 4 is a diagram illustrating an example of a geometric relationship between a position over a road surface when a camera position is vertically projected over the road surface and a reference point (part 1);
FIG. 5 is a diagram illustrating an example of the geometric relationship between the position over the road surface when the camera position is vertically projected over the road surface and the reference point (part 2);
FIG. 6 is a diagram for describing an angle of view and a focal length;
FIG. 7 is a diagram illustrating an example of a captured image in which a part of the target vehicle is shielded;
FIG. 8 is a diagram illustrating a configuration example of processing functions that the image processing apparatus includes;
FIG. 9 is a diagram illustrating a storage example of vehicle information;
FIG. 10 is a diagram illustrating a storage example of a target detection result;
FIG. 11 is a diagram illustrating a detection example of a road region and a shielded region;
FIG. 12 is a flowchart illustrating an example of entire processing of the image processing apparatus;
FIG. 13 is a flowchart illustrating a flow of an example of shielded region detection processing;
FIG. 14 is a flowchart illustrating a flow of an example of distance measurement availability determination processing; and
FIG. 15 is a flowchart illustrating a flow of an example of target speed calculation processing.

DESCRIPTION OF EMBODIMENTS

Hereinafter, embodiments of the present disclosure will be described with reference to the drawings.

[First Embodiment]

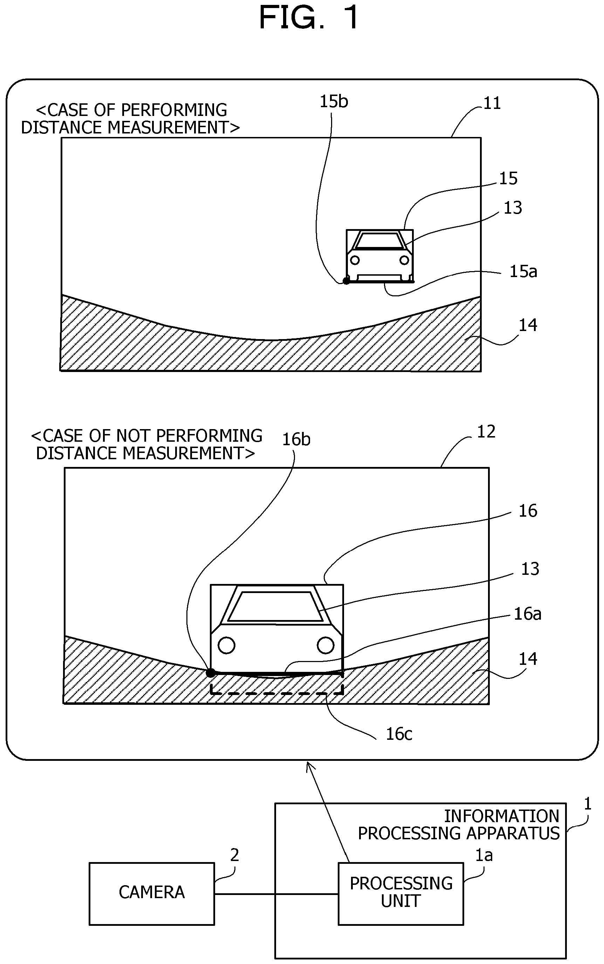

FIG. 1 is a diagram illustrating a configuration example and a processing example of an image processing system according to a first embodiment. The image processing system illustrated in FIG. 1 includes an information processing apparatus 1 and a camera 2.

The information processing apparatus 1 includes a processing unit 1a. The information processing apparatus 1 is implemented as, for example, a personal computer or a server computer. For example, the processing unit 1a is a processor. In this case, processing of the processing unit 1a to be described later may be implemented by the processor executing a predetermined program.

The information processing apparatus 1 calculates, from a captured image captured by the camera 2 installed in a first moving object, a distance between the first moving object and a second moving object included in the captured image. However, when a lower side of a circumscribed rectangle circumscribing the second moving object is not appropriately detected, in a case where a reference point of the lower side is used for calculation of the distance, there is a possibility that an incorrect distance is calculated (a calculation error occurs).

The processing unit 1a of the information processing apparatus 1 performs processing of suppressing calculation of an incorrect distance in the following procedure. Hereinafter, calculation of a distance may be referred to as distance measurement.

The processing unit 1a acquires a captured image captured by the camera 2 installed in the first moving object. The processing unit 1a detects the second moving object from the captured image. FIG. 1 illustrates an example of acquired captured images 11 and 12. A vehicle 13 that is an example of the second moving object is imaged in the captured images 11 and 12. For example, the detection of the second moving object is performed by using a machine learning model trained in advance on a moving object (such as a vehicle) to be detected. As in the captured image 12, even in a case where the entirety of the vehicle 13 is not imaged by being shielded by a shielded region to be described later, the vehicle 13 may be detected as the second moving object.

The processing unit 1a detects a shielded region that is imaged below a road region in the acquired captured image and shields a part of the road region. For example, the processing unit 1a may detect the road region from the acquired captured image by a semantic segmentation technique using a machine learning model trained in advance on a road region. The processing unit 1a may detect a non-road region below the detected road region as a shielded region.

FIG. 1 illustrates an example of a shielded region 14 detected from the captured images 11 and 12. Such a shielded region 14 is a region in which a part of the first moving object in which the camera 2 is mounted is imaged in the captured images 11 and 12. For example, when the first moving object is an automobile and the camera 2 captures an image in front of the automobile, the shielded region 14 is a hood, a dashboard, or the like that is a part of the automobile. For example, when the second moving object is at a close distance to the first moving object, the shielded region 14 may shield a part of the second moving object in the captured image. Although the shielded region 14 shields a part of the road region in the captured image 11, the shielded region 14 further shields a part of the vehicle 13, which is an example of the second moving object, in the captured image 12.

Even in a case where the camera 2 captures an image of the rear of the automobile, a rear portion of the automobile may be imaged below the road region. Also in this case, the rear portion may be detected as a shielded region that is imaged below the road region in the captured image.

An order of the second moving object detection processing and the shielded region detection processing described above may be changed.

Based on the detection results of the second moving object and the shielded region, the processing unit 1a determines whether a predetermined condition that indicates that at least a part of a lower side of a circumscribed rectangle that circumscribes the detected second moving object and the shielded region overlap or are close to each other is satisfied. For example, the circumscribed rectangle is set when the second moving object is detected. The circumscribed rectangle is also referred to as a bounding box.

When the predetermined condition described above is not satisfied, the processing unit 1a calculates a distance between the first moving object and the second moving object based on coordinates of a reference point over the lower side of the circumscribed rectangle. When the predetermined condition described above is satisfied, the processing unit 1a skips the distance calculation processing.

As an example in FIG. 1, it is assumed that the predetermined condition described above is a condition that a part of the lower side of the circumscribed rectangle overlaps the shielded region 14. In the example of the captured image 11 in FIG. 1, since a lower side 15a of a circumscribed rectangle 15 circumscribing the vehicle 13 is separated from the shielded region 14, the lower side 15a does not overlap the shielded region 14. In this case, the distance calculation processing (distance measurement) is performed based on coordinates of a reference point 15b over the lower side 15a. By contrast, in the example of the captured image 12 in FIG. 1, a part of a lower side 16a of a circumscribed rectangle 16 circumscribing a part of the vehicle 13 (a part detected as the second moving object) overlaps the shielded region 14. For this reason, distance measurement is not performed.

In the example illustrated in FIG. 1, the lower side 16a is positioned on above a lower side 16c (in contact with on the road surface) of an ideal circumscribed rectangle surrounding the entire vehicle 13 in the captured image 12. In this case, since the lower side 16a is not in contact with the road surface, an error occurs when the distance calculation processing is performed using a reference point 16b over the lower side 16a.

In the present embodiment, when a predetermined condition that indicates that at least a part of a lower side of a circumscribed rectangle and a shielded region overlap or are close to each other is satisfied, distance measurement is skipped. For example, since the distance measurement is not performed, it is possible to suppress calculation of an incorrect distance. By suppressing the calculation of the incorrect distance, it is possible to suppress an occurrence of an error when calculating a position or a speed of the second moving object by using the distance.

As described above, a non-road region below the detected road region is detected as a shielded region in the captured image. For this reason, the shielded region does not have to be set in advance, and the shielded region may be detected without depending on a type of the first moving object (such as a vehicle model), a type of the camera 2, and the like.

The above-described distance calculation processing by the processing unit 1a may be executed inside the camera 2 or by an apparatus (for example, a driving recorder) in which the camera 2 is mounted, for example.

Each of the first moving object and the second moving object is not limited to an automobile, and may be another vehicle such as a two wheeled vehicle or a bicycle, or may be a moving object other than a vehicle such as a person.

[Second Embodiment]

As a second embodiment, an image processing system that calculates information on a vehicle, which is an example of a second moving object, included in a captured image captured by a camera installed in a vehicle (hereafter, may also be referred to as a host vehicle), which is an example of a first moving object, will be described. Hereinafter, the vehicle that is an example of the second moving object is referred to as a target vehicle.

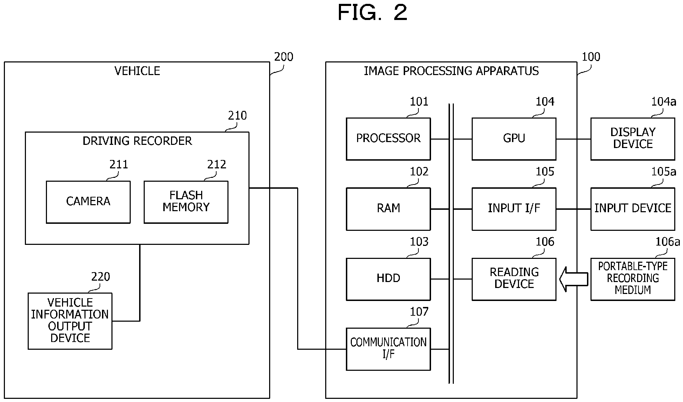

FIG. 2 is a diagram illustrating a configuration example of an image processing system according to the second embodiment. As illustrated in FIG. 2, the image processing system includes an image processing apparatus 100 and a driving recorder 210.

The driving recorder 210 is mounted in a vehicle 200 which is an example of the first moving object, and includes a camera 211 and a flash memory 212. The camera 211 is a monocular camera, and captures an image of a road condition or the like in a traveling direction or in a direction opposite to the traveling direction of the vehicle 200. An image signal output by the camera 211 is converted into a digital signal when the image signal is an analog signal. In a case where the captured image is a color image, the captured image may be converted into a monochrome image. Data of the captured image is encoded by a predetermined encoding method and is stored in the flash memory 212 as moving image data.

The driving recorder 210 receives vehicle information for calculating a movement distance of the vehicle 200 from a vehicle information output device 220 mounted in the vehicle 200. As such vehicle information, for example, a measurement value of a position of the vehicle 200 (for example, position information by global navigation satellite system (GNSS)), a measurement value of a vehicle speed, a vehicle speed pulse corresponding to the vehicle speed, and the like are used.

The vehicle information output device 220 is implemented as, for example, an electronic control unit (ECU). The driving recorder 210 outputs moving image data and vehicle information on each frame of the moving image data to the image processing apparatus 100.

The image processing apparatus 100 obtains the moving image data and the vehicle information from the driving recorder 210. In the present embodiment, although the image processing apparatus 100 receives these kinds of information from the driving recorder 210 by communication as an example, these kinds of information may be obtained via, for example, a portable-type recording medium. By using these kinds of acquired information, the image processing apparatus 100 calculates a distance between the target vehicle and the vehicle 200 (host vehicle), and a position and a speed of the target vehicle.

The image processing apparatus 100 is implemented as, for example, a personal computer or a server computer. As illustrated in FIG. 2, the image processing apparatus 100 in this case includes a processor 101, a random-access memory (RAM) 102, a hard disk drive (HDD) 103, a graphics processing unit (GPU) 104, an input interface (I/F) 105, a reading device 106, and a communication interface (I/F) 107.

The processor 101 centrally controls the entire image processing apparatus 100. The processor 101 is, for example, a central processing unit (CPU), a microprocessor unit (MPU), a digital signal processor (DSP), an application-specific integrated circuit (ASIC), or a programmable logic device (PLD). The processor 101 may also be a combination of two or more elements among the CPU, the MPU, the DSP, the ASIC, and the PLD.

The RAM 102 is used as a main storage device of the image processing apparatus 100. The RAM 102 temporarily stores at least a part of an operating system (OS) program and an application program to be executed by the processor 101. The RAM 102 also stores various kinds of data to be used in processing performed by the processor 101.

The HDD 103 is used as an auxiliary storage device of the image processing apparatus 100. The HDD 103 stores an OS program, an application program, and various kinds of data. A different type of non-volatile storage device such as a solid-state drive (SSD) may be used as the auxiliary storage device.

A display device 104a is coupled to the GPU 104. The GPU 104 causes the display device 104a to display an image in accordance with an instruction from the processor 101. The display device may be a liquid crystal display, an organic electroluminescence (EL) display, or the like.

An input device 105a is coupled to the input interface 105. The input interface 105 transmits a signal output from the input device 105a to the processor 101. Examples of the input device 105a include a keyboard, a pointing device, and the like. Examples of the pointing device include a mouse, a touch panel, a tablet, a touch pad, a track ball, and the like.

A portable-type recording medium 106a is removably attached to the reading device 106. The reading device 106 reads data recorded in the portable-type recording medium 106a, and transmits the data to the processor 101. Examples of the portable-type recording medium 106a include an optical disk, a magneto optical disk, a semiconductor memory, and the like.

The communication interface 107 transmits and receives data to and from other apparatuses via, for example, a network, not illustrated. In this embodiment, the moving image data and vehicle information transmitted from the driving recorder 210 are received by the communication interface 107.

The processing functions of the image processing apparatus 100 may be implemented by the hardware configuration as described above.

The image processing apparatus 100 detects a target vehicle from the captured image captured by the camera mounted in the driving recorder 210 of the vehicle 200, and calculates a distance between the detected target vehicle and the vehicle 200. A target vehicle detection result is output as a position of a circumscribed rectangle (bounding box) circumscribing a range of the target vehicle in the captured image. Based on the distance between the target vehicle and the vehicle 200, the image processing apparatus 100 calculates a position and a speed of the target vehicle in a real space.

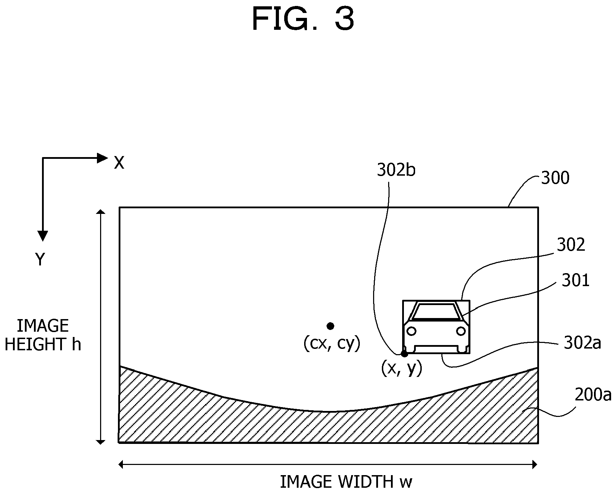

FIG. 3 is a diagram illustrating a detection example of the target vehicle. Illustration of a road region is omitted in the example illustrated in FIG. 3.

FIG. 3 illustrates an example in which a target vehicle 301 is detected from a captured image 300 having an image width w, an image height h, and center coordinates (cx, cy). The detected target vehicle 301 is surrounded by a circumscribed rectangle 302. A reference point 302b over a lower side 302a of the circumscribed rectangle 302 is used to calculate the distance. In the example of the present embodiment, the reference point 302b is a left end of the lower side 302a.

The reference point 302b is not limited to the left end of the lower side 302a of the circumscribed rectangle 302. For example, it may be a right end of the lower side 302a of the circumscribed rectangle 302, or may be a middle point of the lower side 302a. Hereinafter, an X-axis coordinate and a Y-axis coordinate of the reference point 302b are denoted by (x, y).

A shielded region 200a is imaged in the captured image 300. The shielded region 200a is a region in which a part of the vehicle 200 is imaged. In a case where the camera 211 captures an image in front of the vehicle 200, the part of the vehicle 200 which is the shielded region 200a includes a hood or a dashboard.

A method of calculating a distance between the vehicle 200 and the target vehicle 301 from the captured image 300 as illustrated in FIG. 3 will be described below.

The distance between the vehicle 200 and the target vehicle 301 may be represented by, for example, a distance between a position over a road surface when an installation position of the camera 211 (hereafter referred to as a camera position) is vertically projected over the road surface and the reference point 302b.

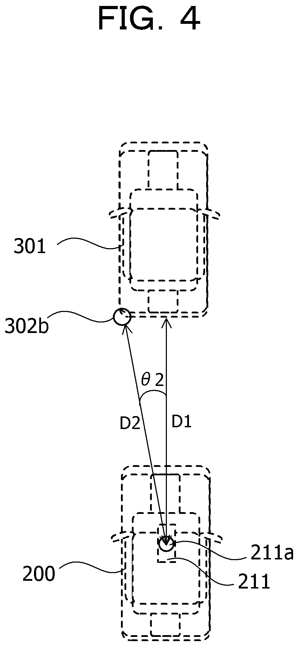

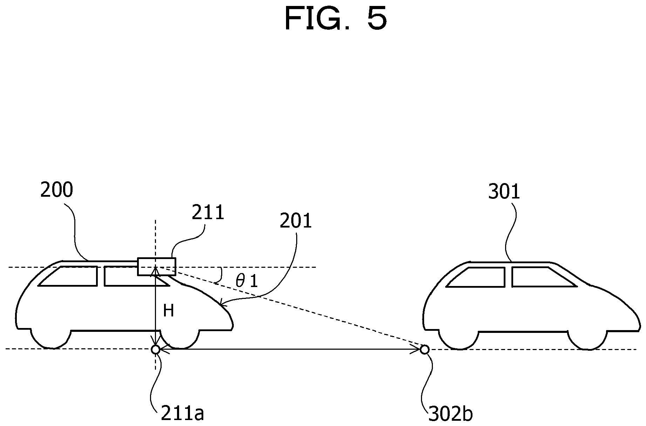

FIGs. 4 and 5 are diagrams illustrating an example of a geometric relationship between the position over the road surface when the camera position is vertically projected over the road surface and the reference point.

FIG. 4 illustrates an example of a geometric relationship between a position 211a over the road surface described above and the reference point 302b when viewed from the sky. FIG. 5 illustrates an example of a geometric relationship between the position 211a over the road surface described above and the reference point 302b when viewed from a side with respect to a traveling direction of the vehicle 200 and the target vehicle 301.

In FIG. 4, a distance between the position 211a over the road surface and the reference point 302b is denoted by D2. D1 indicated in FIGs. 4 and 5 represents a distance from the position 211a to the target vehicle in the traveling direction of the vehicle 200. For example, D1 represents a distance between the position 211a and a straight line that is perpendicular to a left-right direction with respect to the imaging direction of the camera 211 and that passes through the reference point 302b.

$\theta 2$ indicated in FIG. 4 is an angle formed by the traveling direction of the vehicle 200 and a direction from the position 211a to the reference point 302b, and is an angle in a lateral direction with respect to a center of the captured image 300.

H indicated in FIG. 5 is a height of the camera 211 from the road surface. H may be measured in advance. H may be calculated from the captured image 300 (for example, see Japanese Laid-open Patent Publication No. 2021-174288 for a method of calculating the camera height from the captured image). $\theta 1$ indicated in FIG. 5 is an angle formed by an optical axis direction of the camera 211 and a direction from the camera 211 to the reference point 302b, and is an angle in a vertical direction with respect to the center of the captured image 300. For example, the shielded region 200a of the captured image 300 is a hood 201 of the vehicle 200 in FIG. 5.

By using H and $\theta 1$, D1 may be calculated by Expression (1) below.

$$D1 = \frac{H}{\tan\theta 1} \tag{1}$$

By using D2 and $\theta 2$, D1 may be calculated by Expression (2) below.

$$D2 = \frac{D1}{\cos\theta 2} \tag{2}$$

$\theta 1$ and $\theta 2$ may be calculated from an angle of view (a horizontal angle of view and a vertical angle of view) of the camera 211, a focal length, and an image width w and an image height h of the captured image 300.

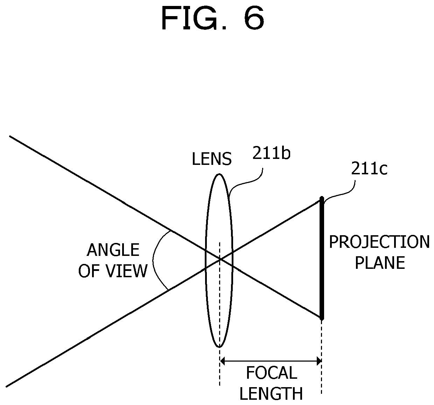

FIG. 6 is a diagram for describing the angle of view and the focal length.

The focal length is a distance between a center of a lens 211b and a projection plane 211c on which the captured image 300 is obtained. The angle of view represents a range imaged in the captured image 300. Information on the focal length and the angle of view is stored in the HDD 103 in advance as information on the camera 211, for example.

$\theta 1$ may be calculated by Expression (3) below.

$$\theta 1 = \tan^{-1}\left( \frac{y - cy}{\frac{h}{2}} * \tan \frac{Vertical\ angle\ of\ view}{2} \right) \quad (3)$$

y denotes a Y-axis coordinate of the reference point 302b in the captured image 300, and cy denotes a Y-axis coordinate of the center of the captured image 300. h denotes an image height of the captured image 300.

θ2 may be calculated by Expression (4) below.

$$\theta 2 = \tan^{-1}\left( \frac{x - cx}{\frac{w}{2}} * \tan \frac{Horizontal\ angle\ of\ view}{2} \right) \quad (4)$$

x denotes an X-axis coordinate of the reference point 302b in the captured image 300, and cx denotes an X-axis coordinate of the center of the captured image 300. w denotes an image width of the captured image 300.

The vertical angle of view in Expression (3) may be calculated by Expression (5) below.

$$Vertical\ angle\ of\ view = 2 * \tan^{-1}\left( \frac{\frac{h}{2}}{Focal\ length} \right) \quad (5)$$

The horizontal angle of view in Expression (4) may be calculated by Expression (6) below.

$$Horizontal\ angle\ of\ view = 2 * \tan^{-1}\left( \frac{\frac{w}{2}}{Focal\ length} \right) \quad (6)$$

By using Expressions (1) to (6) above, it is possible to calculate D1 or D2 as the distance to the target vehicle from the coordinates of the reference point 302b over the captured image.

Although the entire target vehicle 301 is included in the example of the captured image 300 in FIG. 3, there is a case where a part of the target vehicle 301 is shielded by the shielded region 200a, and a captured image in which the entire target vehicle 301 is not imaged is obtained.

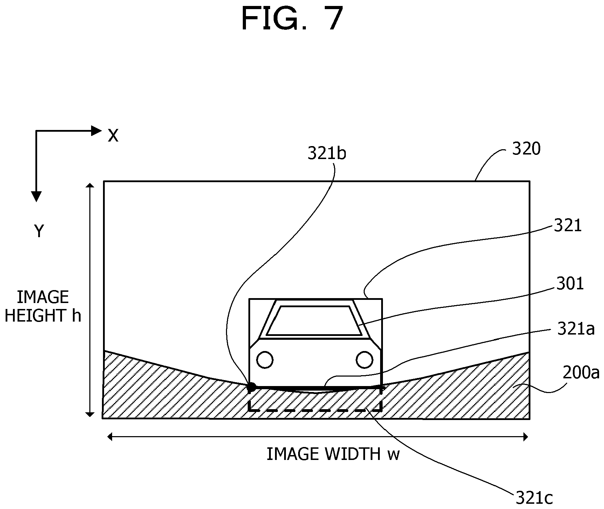

FIG. 7 is a diagram illustrating an example of a captured image in which a part of the target vehicle is shielded. In the example of a captured image 320 illustrated in FIG. 7, a lower portion of the target vehicle 301 is shielded by the shielded region 200a. In such a case, as a detection result of the target vehicle 301, a circumscribed rectangle 321 surrounding a portion of the target vehicle 301 that is not shielded may be obtained.

A lower side 321a of the circumscribed rectangle 321 is positioned above a lower side 321c (in contact with the road surface) of an ideal circumscribed rectangle surrounding the entire target vehicle 301 in the captured image 320. In this case, the lower side 321a is not in contact with the road surface. An error occurs when the distance calculation processing is performed using a reference point 321b over the lower side 321a. Because the reference point 321b is positioned at a higher position than the road surface, θ1 indicated in FIG. 5 or Expression (3) may not be correctly calculated, and thus D1 and D2 may not be correctly calculated.

To avoid the calculation of the incorrect distance, the image processing apparatus 100 according to the present embodiment skips the distance measurement when a predetermined condition that indicates that at least a part of the lower side 321a of the circumscribed rectangle 321 and the shielded region 200a overlap or are close to each other is satisfied as illustrated in FIG. 7.

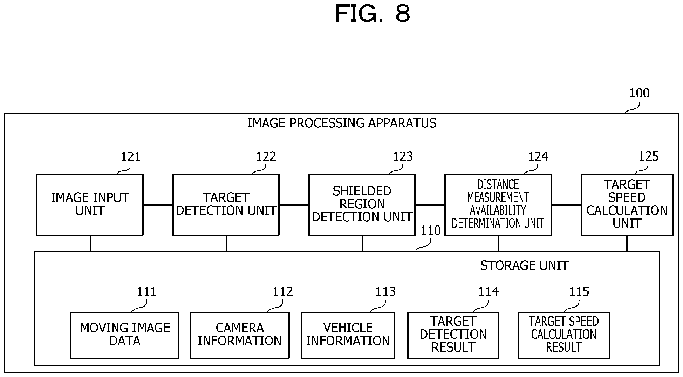

FIG. 8 is a diagram illustrating a configuration example of processing functions that the image processing apparatus includes. As illustrated in FIG. 8, the image processing apparatus 100 includes a storage unit 110, an image input unit 121, a target detection unit 122, a shielded region detection unit 123, a distance measurement availability determination unit 124, and a target speed calculation unit 125.

The storage unit 110 is implemented, for example, as a storage area of a storage device such as the RAM 102 and the HDD 103 included in the image processing apparatus 100. For example, the storage unit 110 stores moving image data 111, camera information 112, vehicle information 113, a target detection result 114, and a target speed calculation result 115.

The moving image data 111 is data of a captured image generated by capturing an image by the camera 211 and transmitted from the driving recorder 210.

The camera information 112 includes the vertical angle of view and the horizontal angle of view of the camera 211, which are used to calculate $\theta 1$ and $\theta 2$ in Expressions (3) and (4), and the height h of the camera 211 from the road surface, which is used to calculate D1 in Expression (1).

For example, the vehicle information 113 includes a measurement value of a position of the vehicle 200 at the time of capturing the captured image of each frame, which is measured by the GNSS. The vehicle information 113 may include a measurement value of a speed of the vehicle 200 at the time of capturing the captured image of each frame, a vehicle speed pulse corresponding to the speed, and the like.

The target detection result 114 includes a detection result of a vehicle to be detected (target vehicle). The detection result is represented by coordinates of four corners of a circumscribed rectangle of the target vehicle. In a case where there are a plurality of target vehicles, an identification number may be given to a detection result of each target vehicle so that each target vehicle may be distinguished and tracked, or in order to distinguish an attribute of each target vehicle.

The target speed calculation result 115 includes a speed calculation result calculated for each target vehicle.

For example, the processing of the image input unit 121, the target detection unit 122, the shielded region detection unit 123, the distance measurement availability determination unit 124, and the target speed calculation unit 125 is implemented by the processor 101 executing a predetermined program.

The image input unit 121 acquires the moving image data 111 including the captured image of each frame and the vehicle information 113 from the driving recorder 210. The image input unit 121 stores the moving image data 111 and the vehicle information 113 in the storage unit 110. The image input unit 121 inputs the captured image to the target detection unit 122 for each frame or at intervals of a predetermined number of frames.

The target detection unit 122 detects a target vehicle from the input captured image. The target detection unit 122 outputs the target detection result 114 represented by coordinates of four corners of a circumscribed rectangle of the detected target vehicle. The target detection result 114 is stored in the storage unit 110.

The detection of the target vehicle by the target detection unit 122 is executed by using, for example, a trained model for vehicle detection. For example, such a trained model is generated by machine learning (for example, deep learning) using, as teacher data, a large number of images including a vehicle to be detected. Position information of a circumscribed rectangle corresponding to the position of the vehicle is added to these pieces of teacher data, and these pieces of position information are used as correct answer data in the machine learning.

In a case where there are a plurality of target vehicles to be detected, the target detection unit 122 may output an identification number of a detection result of each target vehicle so that each target vehicle may be distinguished and tracked, or in order to distinguish an attribute of each target vehicle.

The shielded region detection unit 123 detects a road region from the captured image, and detects a non-road region below the road region as a shielded region. The detection of the road region by the shielded region detection unit 123 is performed by semantic segmentation using a trained model, for example. For example, such a trained model is generated by machine learning (for example, deep learning) using, as teacher data, a large number of images in which individual pixels are classified into a road region and other regions.

Based on the target detection result 114 and the detection result of the shielded region, the distance measurement availability determination unit 124 determines whether calculation (distance measurement) of the distance between the vehicle 200 and the detected target vehicle is possible. When a part of a lower side of a circumscribed rectangle of the target vehicle is included in the shielded region, the distance measurement availability determination unit 124 determines that the distance measurement is not possible. For example, when the lower side of the circumscribed rectangle of the target vehicle is not included in the shielded region, the distance measurement availability determination unit 124 determines that distance measurement is possible. Even in a case where the lower side of the circumscribed rectangle of the target vehicle is not included in the shielded region, when at least the part of the lower side and the shielded region are close to each other, the distance measurement availability determination unit 124 may determine that distance measurement is not possible. For example, when a distance between at least a part of the lower side of the circumscribed rectangle and the shielded region over the captured image is within a predetermined value, the distance measurement availability determination unit 124 may determine that at least the part of the lower side of the circumscribed rectangle and the shielded region are close to each other.

For the target vehicle for which distance measurement is determined to be possible, the target speed calculation unit 125 calculates a distance, a position, and a speed.

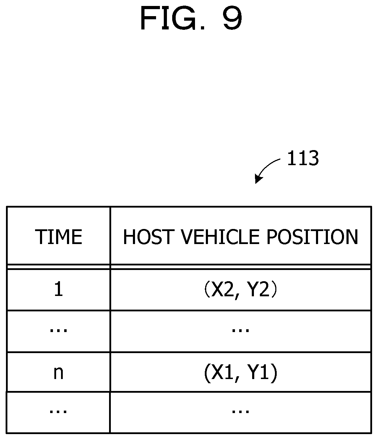

FIG. 9 is a diagram illustrating a storage example of the vehicle information.

In the storage example of the vehicle information 113 in FIG. 9, a measurement value of the position of the vehicle 200 (host vehicle position) at each time is represented by two dimensional coordinates of latitude and longitude, for example. A host vehicle position at a time 1 is represented as (X2, Y2), and a host vehicle position at a time n is represented as (X1, Y1).

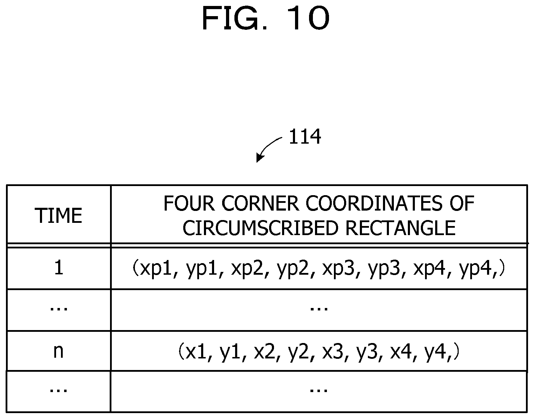

FIG. 10 is a diagram illustrating a storage example of the target detection result.

In the storage example of the target detection result 114 illustrated in FIG. 10, a detection result of the target vehicle detected from the captured image of the frame at each time is represented by four corner coordinates of a circumscribed rectangle. Each of the four corner coordinates is represented by an X-axis coordinate and a Y-axis coordinate in the captured image. The four corner coordinates at the time 1 are represented as (xp1, yp1, xp2, yp2, xp3, yp3, xp4, yp4), and the four corner coordinates at the time n are represented as (x1, y1, x2, y2, x3, y3, x4, y4). In a case where a plurality of target vehicles are detected from the same frame, a plurality of sets of four corner coordinates of the circumscribed rectangles are stored in the record of the same frame.

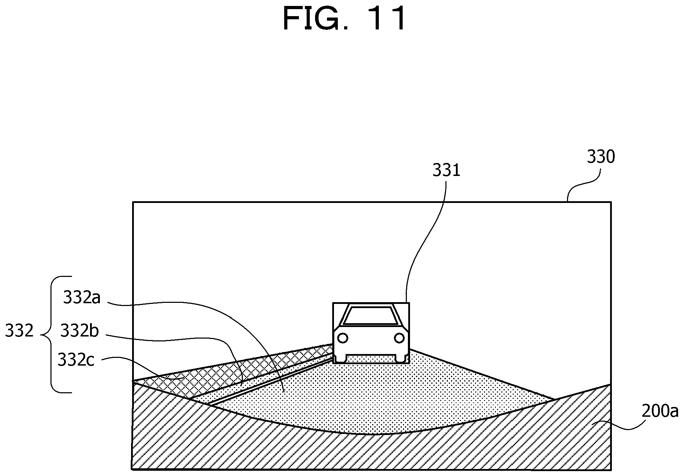

FIG. 11 is a diagram illustrating a detection example of the road region and the shielded region.

In a captured image 330 in FIG. 11, a circumscribed rectangle 331 obtained by detecting a target vehicle, a road region 332, and the shielded region 200a are imaged. The road region 332 includes a roadway region 332a, a roadside strip region 332b, and a sidewalk region 332c. The shielded region 200a is a hood, a dashboard, or the like of the vehicle 200, and shields a part of the road region 332 in the example of FIG. 11. How a part of the vehicle 200 such as a hood or a dashboard is imaged by the camera 211 depends on the driving recorder 210, a vehicle model, and the like, and is various.

By contrast, variation in how the road region 332 is imaged by the camera 211 is small. For this reason, for example, the road region 332 may be accurately detected from the captured image 330 by a semantic segmentation technique using a machine learning model that is trained on a road region in advance. A non-road region below the detected road region 332 in the captured image 330 may be detected as the shielded region 200a.

Processing of the image processing apparatus 100 will be described by using flowcharts.

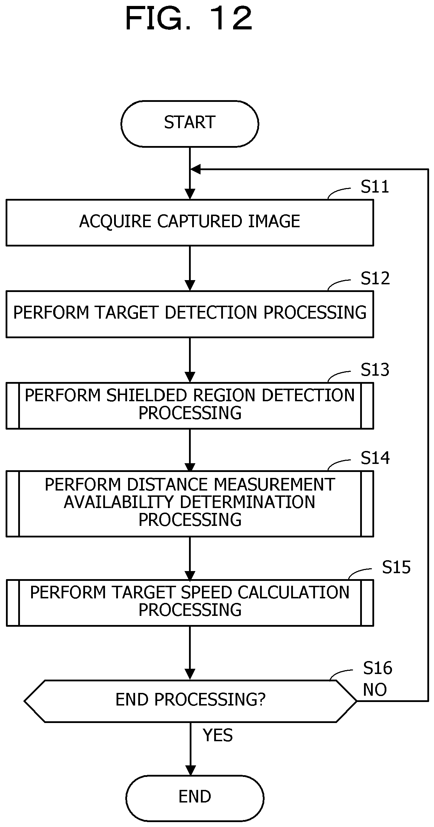

FIG. 12 is a flowchart illustrating an example of the entire processing of the image processing apparatus.

[Step S11] The image input unit 121 acquires a captured image for one frame to be processed from the moving image data 111 captured by the driving recorder 210, and inputs the captured image to the target detection unit 122. The image input unit 121 acquires information (for example, position information of the vehicle 200) corresponding to the acquired captured image from the vehicle information 113.

In this step S11, for example, captured images are sequentially acquired frame by frame from a head side of the moving image data 111. Alternatively, the captured images may be acquired at an interval of a predetermined number of frames from the head side of the moving image data 111.

[Step S12] The target detection unit 122 performs processing of detecting a target vehicle from the input captured image. When the target vehicle is detected, the target detection result 114 including four corner coordinates of a circumscribed rectangle corresponding to the target vehicle is output. When no target vehicle is detected, steps S13 to S15 are skipped.

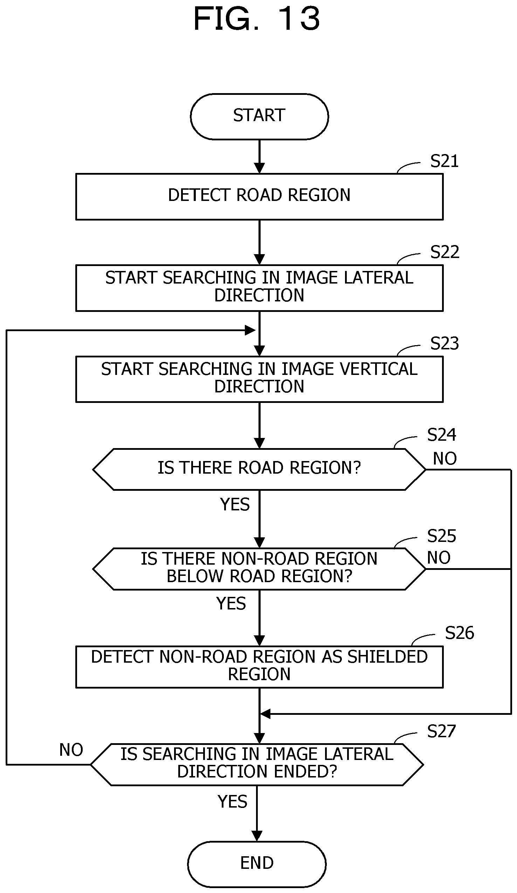

[Step S13] The shielded region detection unit 123 detects a shielded region from the captured image. An example of a procedure of shielded region detection processing will be described later (see FIG. 13).

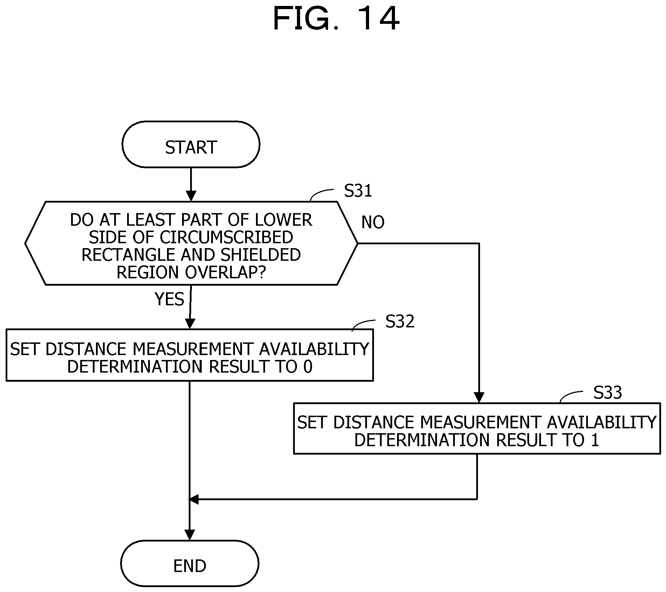

[Step S14] Based on the target detection result 114 output in step S12 and the shielded region detection result, the distance measurement availability determination unit 124 determines whether calculation (distance measurement) of a distance between the vehicle 200 and the detected target vehicle is possible. An example of a procedure of distance measurement availability determination processing will be described later (see FIG. 14).

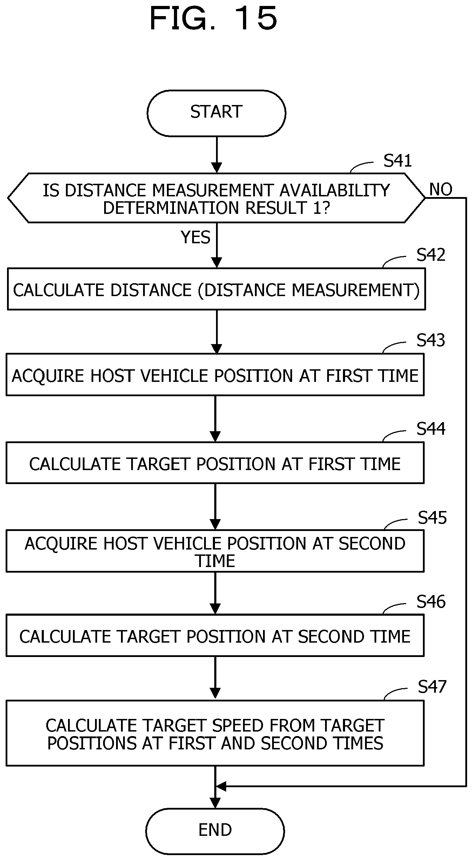

[Step S15] The target speed calculation unit 125 calculates a distance to the target vehicle, a position of the target vehicle, and a speed of the target vehicle for which distance measurement is determined to be possible. An example of a procedure of these processing (target speed calculation processing) by the target speed calculation unit 125 will be described later (see FIG. 15).

[Step S16] The image processing apparatus 100 determines whether to end the processing. For example, the image processing apparatus 100 determines to end the processing in a case where the processing of all the frames of the moving image data 111 captured by the driving recorder 210 is completed, or in a case where the end of the speed calculation processing is instructed by an operation of a user. When the image processing apparatus 100 determines not to end the processing, the processing from step S11 is repeated for the next frame.

With the above, the processing of the image processing apparatus 100 ends.

In a case where step S13 is executed regardless of the processing result in step S12, the order of the processing in steps S12 and S13 may be changed. Steps S13 and S12 are executed in this order, and when the target vehicle is not detected, steps S14 and S15 are skipped.

FIG. 13 is a flowchart illustrating a flow of an example of the shielded region detection processing.

[Step S21] The shielded region detection unit 123 detects a road region from the captured image from which the target vehicle is to be detected. For example, the shielded region detection unit 123 sets, for each pixel of the captured image, a flag value indicating whether the pixel belongs to the road region. For example, 1 is set as the flag value for a pixel belonging to a road region, and 0 is set as the flag value for a pixel belonging to a non-road region.

[Step S22] To detect a shielded region, the shielded region detection unit 123 starts searching the captured image in an image lateral direction. For example, the shielded region detection unit 123 first selects a pixel at an upper left corner of the captured image.

[Step S23] The shielded region detection unit 123 starts searching the captured image in an image vertical direction. For example, in a case where the pixel at the upper left corner of the captured image is selected in the processing of step S22, the shielded region detection unit 123 sequentially selects pixels included in a vertical line including that pixel in a downward direction, and performs the following processing.

[Step S24] The shielded region detection unit 123 determines whether there is a road region. In processing of step S24, when there is a pixel belonging to the road region in the selected vertical line, it is determined that there is a road region. For example, when 1 is set for a certain pixel as the flag value described above, the shielded region detection unit 123 determines that the pixel belongs to the road region. When it is determined that there is a road region, the shielded region detection unit 123 performs processing of step S25. When it is determined that there is no road region, the shielded region detection unit 123 performs processing of step S27.

[Step S25] When it is determined that there is a road region, the shielded region detection unit 123 determines whether there is a non-road region below the road region. In the processing of step S25, the shielded region detection unit 123 specifies a lower end pixel belonging to the road region from the pixels of the vertical line, and searches whether there is a pixel belonging to the non-road region below the lower end pixel (for example, whether the road region reaches below the line). When it is determined that there is a pixel belonging to the non-road region, the shielded region detection unit 123 determines that there is a non-road region. For example, when 0 is set for a certain pixel as the flag value described above, the shielded region detection unit 123 determines that the pixel belongs to the non-road region. When it is determined that there is a non-road region, the shielded region detection unit 123 performs processing of step S26. When it is determined that there is no non-road region, the shielded region detection unit 123 performs processing of step S27.

[Step S26] The shielded region detection unit 123 detects a non-road region below the road region as a shielded region. For example, the shielded region detection unit 123 sets a detection result (for example, 1) indicating a shielded region for a pixel determined to belong to a non-road region.

[Step S27] The shielded region detection unit 123 determines whether the searching the captured image in the image lateral direction has ended. After the processing for all the pixels in the image lateral direction is completed, the shielded region detection unit 123 determines that the searching in the image lateral direction has ended, and ends the shielded region detection processing. For example, in a case where it is determined that the searching in the image lateral direction has not ended, the shielded region detection unit 123 selects an uppermost pixel of a line that is to the right by one line, and repeats the processing from step S23.

The shielded region detection result obtained in the above-described processing is input to the distance measurement availability determination unit 124. The shielded region detection result may be stored in the storage unit 110.

As long as a direction and a position of the camera 211 are the same, there is a high possibility that the same shielded region detection result is obtained for the captured image of each frame. For this reason, the detection of the shielded region may not necessarily be performed on the captured images of all the frames in which the detection of the target vehicle is performed. For example, the shielded region may be detected when a speed of the host vehicle exceeds a predetermined value, and then the detection result may be used while the direction and the position of the camera 211 are the same.

FIG. 14 is a flowchart illustrating a flow of an example of the distance measurement availability determination processing.

[Step S31] Based on the target detection result 114 output in step S12 and the shielded region detection result in step S13, the distance measurement availability determination unit 124 determines whether at least a part of the lower side of the circumscribed rectangle and the shielded region overlap. For example, the distance measurement availability determination unit 124 performs the determination processing of step S31 by detecting whether a value (for example, 1) indicating that the pixel belongs to the shielded region is set in some pixels of the lower side of the circumscribed rectangle. When it is determined that at least a part of the lower side of the circumscribed rectangle and the shielded region overlap, the distance measurement availability determination unit 124 performs processing of step S32. When it is determined that at least a part of the lower side of the circumscribed rectangle and the shielded region do not overlap, the distance measurement availability determination unit 124 performs processing of step S33.

[Step S32] The distance measurement availability determination unit 124 sets a distance measurement availability determination result of the target vehicle corresponding to the circumscribed rectangle to 0.

[Step S33] The distance measurement availability determination unit 124 sets a distance measurement availability determination result of the target vehicle corresponding to the circumscribed rectangle to 1.

In the example illustrated in FIG. 14, "0" of the distance measurement availability determination result indicates that distance measurement is not possible, and "1" of the distance measurement availability determination result indicates that distance measurement is possible.

After the processing of steps S32 and S33, the distance measurement availability determination processing ends.

In a case where a captured image includes a plurality of circumscribed rectangles and it is determined whether distance measurement of a target vehicle corresponding to each circumscribed rectangle is possible, the above-described processing is performed on each circumscribed rectangle.

In a case where n% or more (for example, 40% or more) of the lower side of the circumscribed rectangle is included in the shielded region, the distance measurement availability determination unit 124 may set the distance measurement availability result to 0. In a case where the distance between the lower side of the circumscribed rectangle and the shielded region over the captured image is within a predetermined value, the distance measurement availability determination unit 124 may set the distance measurement availability result to 0 even when the lower side of the circumscribed rectangle is not included in the shielded region.

FIG. 15 is a flowchart illustrating a flow of an example of target speed calculation processing. The processing in FIG. 15 is executed for each of the target vehicles detected in step S12 in FIG. 12.

Because the calculation of the speed of the target vehicle is performed based on a temporal change in the position of the target vehicle, the calculation is performed by using detection results at different first and second times. According to the following description, the first time is an imaging time for the captured image currently processed, which is acquired in step S11 in FIG. 11. The second time is a past time at which the distance and the position of the same target vehicle have been detected.

The first time and the second time may be times of adjacent frames. However, when a time period between the first time and the second time is too short, a temporal change in the position of the target vehicle during the time period is small, and thus it may be difficult to appropriately calculate the speed. For this reason, it is desirable that the first time and the second time be appropriately determined such that the temporal change in the position to the extent that the speed may be appropriately calculated is obtained.

[Step S41] The target speed calculation unit 125 determines whether a distance measurement availability determination result of a target vehicle for which a speed is to be calculated is 1. As described above, distance measurement availability determination result = 1 indicates that distance measurement is possible. When it is determined that the distance measurement availability determination result is 1, the target speed calculation unit 125 performs processing of step S42. When the target speed calculation unit 125 determines that the distance measurement availability determination result is not 1, the target speed calculation unit 125 skips the execution of the calculation processing of the distance, the position, and the speed. In this case, the processing in FIG. 15 ends.

[Step S42] For the target vehicle for which the distance measurement availability determination result is determined to be 1, the target speed calculation unit 125 calculates the distance by Expression (1) to Expression (4). Accordingly, the distance to the target vehicle at the first time is calculated.

[Step S43] The target speed calculation unit 125 acquires a host vehicle position at the first time included in the vehicle information 113. In the example of the vehicle information 113 illustrated in FIG. 9, for example, the host vehicle position (X2, Y2) at the time 1 is acquired as the host vehicle position at the first time.

[Step S44] The target speed calculation unit 125 calculates a position of the target vehicle (target position) at the first time. Based on the host vehicle position at the first time and the distance calculation result at the first time, the target speed calculation unit 125 calculates the position of the target vehicle at the first time.

[Step S45] The target speed calculation unit 125 acquires a host vehicle position at the second time included in the vehicle information 113. In the example of the vehicle information 113 illustrated in FIG. 9, for example, the host vehicle position (X1, Y1) at a time n is acquired as the host vehicle position at the second time.

[Step S46] The target speed calculation unit 125 calculates a target position at the second time. The target speed calculation unit 125 acquires a calculation result of the distance to the target vehicle calculated from the captured image at the second time, and calculates the position of the target vehicle at the second time based on the acquired distance calculation result and the host vehicle position at the second time. Instead of calculating the position, the position of the target vehicle calculated from the captured image at the second time may be acquired.

[Step S47] Based on the positions of the target vehicle at the first time and the second time, the target speed calculation unit 125 calculates the speed of the target vehicle. The speed calculation result is stored in the storage unit 110 as the target speed calculation result 115.

After the processing of step S47 ends, the target speed calculation processing ends.

The target speed calculation unit 125 may display the calculation results of the distance, the position, and the speed on the display device 104a in FIG. 2. The target speed calculation unit 125 may transmit the calculation results of the distance, the position, and the speed to an information processing apparatus outside the image processing apparatus 100 via a network (not illustrated).

A procedure of calculating the speed of the target vehicle is not limited to the procedure illustrated in FIG. 15. For example, the speed of the target vehicle at the first time may be calculated based on the speed of the host vehicle at the first time and the second time and the distance to the target vehicle at the first time and the second time.

The order of the above-described processing is an example, and the order may be changed as appropriate.

As illustrated in FIG. 14, when at least a part of the lower side of the circumscribed rectangle of the target vehicle and the shielded region overlap (when there is a possibility that an incorrect distance is calculated), the distance measurement availability determination result is 0. As illustrated in FIG. 15, the distance measurement is skipped for the target vehicle for which the distance measurement availability determination result is 0. For this reason, it is possible to suppress calculation of the incorrect distance.

As illustrated in FIG. 15, since the target speed calculation processing is skipped in a case where the distance measurement availability determination result is 0, it is also possible to suppress calculation of an incorrect position or speed.

The captured image captured by the driving recorder 210 is used for various applications. For example, to grasp a situation of an accident as accurately as possible, an automobile insurance company acquires and analyzes a captured image from a driving recorder of a customer. According to the processing of the present embodiment, since calculation of an incorrect distance, position, and speed is suppressed, it may be expected to provide highly accurate moving object information representing the situation of the accident.

As described above, in the captured image, a non-road region below the detected road region is detected as a shielded region. For this reason, the shielded region does not have to be set in advance, and the shielded region may be detected without depending on a type of the host vehicle (such as a vehicle model), a type of the camera 211, and the like.

At least a part of the processing functions of the image processing apparatus 100 illustrated in FIG. 8 may be mounted in the driving recorder 210.

The processing functions of the apparatuses illustrated in each of the above described embodiments (for example, the information processing apparatus 1 and the image processing apparatus 100) may be implemented by a computer. In such a case, a program describing a processing content of the functions to be included in each apparatus is provided, and the processing functions described above are implemented over the computer by executing the program with the computer. The program describing the processing content may be recorded in a computer-readable recording medium. Examples of the computer-readable recording medium include a magnetic storage device, an optical disk, a semiconductor memory, and the like. Examples of the magnetic storage device include an HDD, a magnetic tape, and the like. Examples of the optical disk include a compact disc (CD), a Digital Versatile Disc (DVD), a Blu-ray disc (BD, registered trademark), and the like.

In a case where the program is distributed, for example, a portable-type recording medium such as a DVD or a CD on which the program is recorded is sold. The program may be stored in a storage device of a server computer and transferred from the server computer to another computer via a network.

The computer that executes the program stores, in a storage device thereof, the program recorded on the portable-type recording medium or the program transferred from the server computer, for example. The computer reads the program from the storage device thereof and executes processing according to the program. The computer may also read the program directly from the portable-type recording medium and execute the processing according to the program. Each time the program is transferred from the server computer coupled to the computer via the network, the computer may also sequentially execute the processing according to the received program.

Although aspects of the moving object information calculation method and the moving object information calculation program of the present disclosure have been described thus far based on the embodiments, these are merely examples and are not limited to the above description.

**Claims**

1. A moving object information calculation method for a computer to execute a process, the process comprising:

   acquiring a first captured image captured by a camera installed in a first moving object;
   detecting a second moving object from the first captured image;
   detecting a shielded region that is imaged below a road region in the first captured image and shields a part of the road region;
   determining whether a predetermined condition that indicates that at least a part of a lower side of a circumscribed rectangle that circumscribes the detected second moving object and the shielded region overlap or are close to each other is satisfied based on detection results of the second moving object and the shielded region; and
   in a case where the predetermined condition is not satisfied, calculating a distance between the first moving object and the second moving object based on coordinates of a reference point over the lower side, and in a case where the predetermined condition is satisfied, skipping calculation processing of the distance.

2. The moving object information calculation method according to claim 1, wherein
   the shielded region is a region in which a part of the first moving object is imaged in the first captured image.

3. The moving object information calculation method according to claim 2, wherein
   in a case where the first moving object is a vehicle, the part of the first moving object includes a hood or a dashboard.

4. The moving object information calculation method according to claim 1, further comprising:

   detecting the road region from the first captured image; and
   detecting a non-road region below the detected road region as the shielded region in the first captured image.

5. The moving object information calculation method according to claim 1, further comprising:

   in a case where the predetermined condition is not satisfied, executing speed calculation processing of calculating the distance, calculating a first position of the second moving object based on the distance, and calculating a speed of the second moving object based on the first position and a second position of the second moving object calculated based on a second captured image captured in past by the camera; and
   in a case where the predetermined condition is satisfied, skipping the speed calculation processing.

6. A moving object information calculation program for causing a computer to execute a process, the process comprising:

   acquiring a first captured image captured by a camera installed in a first moving object;
   detecting a second moving object from the first captured image;
   detecting a shielded region that is imaged below a road region in the first captured image and shields a part of the road region;
   determining whether a predetermined condition that indicates that at least a part of a lower side of a circumscribed rectangle that circumscribes the detected second moving object and the shielded region overlap or are close to each other is satisfied based on detection results of the second moving object and the shielded region; and
   in a case where the predetermined condition is not satisfied, calculating a distance between the first moving object and the second moving object based on coordinates of a reference point over the lower side, and in a case where the predetermined condition is satisfied, skipping calculation processing of the distance.

7. The moving object information calculation program according to claim 6, wherein
   the shielded region is a region in which a part of the first moving object is imaged in the first captured image.

8. The moving object information calculation program according to claim 7, wherein
   in a case where the first moving object is a vehicle, the part of the first moving object includes a hood or a dashboard.

9. The moving object information calculation program according to claim 6, for causing the computer to execute the process further comprising:

   detecting the road region from the first captured image; and
   detecting a non-road region below the detected road region as the shielded region in the first captured image.

10. The moving object information calculation program according to claim 6, for causing the computer to execute the process further comprising:

    in a case where the predetermined condition is not satisfied, executing speed calculation processing of calculating the distance, calculating a first position of the second moving object based on the distance, and calculating a speed of the second moving object based on the first position and a second position of the second moving object calculated based on a second captured image captured in past by the camera; and
    in a case where the predetermined condition is satisfied, skipping the speed calculation processing.

11. A moving object information calculation apparatus:
    a processor configured to:

    acquire a first captured image captured by a camera installed in a first moving object;
    detect a second moving object from the first captured image;
    detect a shielded region that is imaged below a road region in the first captured image and shields a part of the road region;

**EP 4 517 698 A1**

determine whether a predetermined condition that indicates that at least a part of a lower side of a circumscribed rectangle that circumscribes the detected second moving object and the shielded region overlap or are close to each other is satisfied based on detection results of the second moving object and the shielded region; and in a case where the predetermined condition is not satisfied, calculate a distance between the first moving object and the second moving object based on coordinates of a reference point over the lower side, and in a case where the predetermined condition is satisfied, skip calculation processing of the distance.

12. The moving object information calculation apparatus according to claim 11, wherein
the shielded region is a region in which a part of the first moving object is imaged in the first captured image.

13. The moving object information calculation apparatus according to claim 12, wherein
in a case where the first moving object is a vehicle, the part of the first moving object includes a hood or a dashboard.

14. The moving object information calculation apparatus according to claim 11, the processor further configured to:

    detect the road region from the first captured image; and
    detect a non-road region below the detected road region as the shielded region in the first captured image.

15. The moving object information calculation apparatus according to claim 11, the processor further configured to:

    in a case where the predetermined condition is not satisfied, execute speed calculation processing of calculating the distance, calculating a first position of the second moving object based on the distance, and calculating a speed of the second moving object based on the first position and a second position of the second moving object calculated based on a second captured image captured in past by the camera; and
    in a case where the predetermined condition is satisfied, skip the speed calculation processing.

14

# FIG. 1

<CASE OF PERFORMING
DISTANCE MEASUREMENT>

15b

11

15

13

15a

14

<CASE OF NOT PERFORMING
DISTANCE MEASUREMENT>

16b

12

16

13

16a

14

16c

INFORMATION
PROCESSING APPARATUS

1

CAMERA

2

PROCESSING
UNIT

1a

FIG. 2

# FIG. 3

# FIG. 4

# FIG. 5

# FIG. 6

LENS 211b

211c

ANGLE
OF VIEW

PROJECTION
PLANE

FOCAL
LENGTH

# FIG. 7

X

Y

321b

320

321

301

321a

200a

IMAGE
HEIGHT h

IMAGE WIDTH w

321c

# FIG. 8

**IMAGE PROCESSING APPARATUS** — 100

| 121 IMAGE INPUT UNIT | 122 TARGET DETECTION UNIT | 123 SHIELDED REGION DETECTION UNIT | 124 DISTANCE MEASUREMENT AVAILABILITY DETERMINATION UNIT | 125 TARGET SPEED CALCULATION UNIT |

110 **STORAGE UNIT**

| 111 MOVING IMAGE DATA | 112 CAMERA INFORMATION | 113 VEHICLE INFORMATION | 114 TARGET DETECTION RESULT | 115 TARGET SPEED CALCULATION RESULT |

# FIG. 9

113

| TIME | HOST VEHICLE POSITION |
|------|----------------------|
| 1 | (X2, Y2) |
| ... | ... |
| n | (X1, Y1) |
| ... | ... |

# FIG. 10

114

| TIME | FOUR CORNER COORDINATES OF CIRCUMSCRIBED RECTANGLE |
|------|------|
| 1 | (xp1, yp1, xp2, yp2, xp3, yp3, xp4, yp4,) |
| ... | ... |
| n | (x1, y1, x2, y2, x3, y3, x4, y4,) |
| ... | ... |

# FIG. 11

# FIG. 12

```
                    ┌─────────────┐
                    │    START    │
                    └──────┬──────┘
                           │              ┌──── S11
                           ▼              │
              ┌────────────────────────────┐
              │    ACQUIRE CAPTURED IMAGE   │
              └──────────────┬─────────────┘
                             │            ┌──── S12
                             ▼            │
              ┌────────────────────────────┐
              │ PERFORM TARGET DETECTION    │
              │        PROCESSING           │
              └──────────────┬─────────────┘
                             │            ┌──── S13
                             ▼            │
              ┌────────────────────────────┐
              │ PERFORM SHIELDED REGION     │
              │   DETECTION PROCESSING      │
              └──────────────┬─────────────┘
                             │            ┌──── S14
                             ▼            │
              ┌────────────────────────────┐
              │ PERFORM DISTANCE MEASUREMENT│
              │ AVAILABILITY DETERMINATION  │
              │        PROCESSING           │
              └──────────────┬─────────────┘
                             │            ┌──── S15
                             ▼            │
              ┌────────────────────────────┐
              │ PERFORM TARGET SPEED        │
              │ CALCULATION PROCESSING      │
              └──────────────┬─────────────┘
                             │            ┌──── S16
                             ▼            │   NO
              ╱────────────────────────────╲────────┐
              ╲     END PROCESSING?         ╱        │
               ╲──────────────┬───────────╱         │
                             │ YES                   │
                             ▼                       │
                    ┌─────────────┐                  │
                    │     END     │                  │
                    └─────────────┘                  │
```

# FIG. 13

```
                    ┌─────────────┐
                    │    START    │
                    └──────┬──────┘
                           │                        S21
                           ▼
        ┌──────────────────────────────────────┐
        │         DETECT ROAD REGION            │
        └──────────────────┬───────────────────┘
                           │                        S22
                           ▼
        ┌──────────────────────────────────────┐
        │   START SEARCHING IN IMAGE LATERAL    │
        │              DIRECTION                │
        └──────────────────┬───────────────────┘
                           │
          ┌───────────────►│                        S23
          │                ▼
        ┌─┴────────────────────────────────────┐
        │   START SEARCHING IN IMAGE VERTICAL   │
        │              DIRECTION                │
        └──────────────────┬───────────────────┘
                           │                        S24
                           ▼                     NO
        ◄──────────────────────────────────────►─────┐
        │        IS THERE ROAD REGION?          │     │
        ◄───────────────────────────────────────►    │
                           │ YES                      │
                           ▼                        S25
                                                   NO │
        ◄──────────────────────────────────────►─────┤
        │     IS THERE NON-ROAD REGION          │     │
        │        BELOW ROAD REGION?             │     │
        ◄───────────────────────────────────────►    │
                           │ YES                      │
                           ▼                        S26
        ┌──────────────────────────────────────┐     │
        │  DETECT NON-ROAD REGION AS SHIELDED   │     │
        │              REGION                   │     │
        └──────────────────┬───────────────────┘     │
                           │◄───────────────────────────
                           ▼                        S27
    NO ◄───────────────────────────────────────►
        │  IS SEARCHING IN IMAGE LATERAL        │
        │        DIRECTION ENDED?               │
        ◄───────────────────────────────────────►
                           │ YES
                           ▼
                    ┌─────────────┐
                    │     END     │
                    └─────────────┘
```

# FIG. 14

```
        ┌─────────────┐
        │    START    │
        └─────────────┘
               │
               ▼                                    ⌒ S31
      ╱─────────────────────────────╲
     ╱  DO AT LEAST PART OF LOWER     ╲      NO
    ╱   SIDE OF CIRCUMSCRIBED          ╲──────────┐
    ╲   RECTANGLE AND SHIELDED         ╱          │
     ╲  REGION OVERLAP?               ╱           │
      ╲─────────────────────────────╱            │
               │ YES                              │
               ▼              ⌒ S32               │
   ┌──────────────────────────────────┐          │
   │ SET DISTANCE MEASUREMENT AVAILABILITY│       │
   │ DETERMINATION RESULT TO 0          │         │
   └──────────────────────────────────┘          │
               │                                  ▼              ⌒ S33
               │              ┌──────────────────────────────────┐
               │              │ SET DISTANCE MEASUREMENT AVAILABILITY│
               │              │ DETERMINATION RESULT TO 1          │
               │              └──────────────────────────────────┘
               │                                  │
               ▼◄─────────────────────────────────┘
        ┌─────────────┐
        │     END     │
        └─────────────┘
```

# FIG. 15

START

S41

IS DISTANCE MEASUREMENT AVAILABILITY DETERMINATION RESULT 1? — NO

YES

S42

CALCULATE DISTANCE (DISTANCE MEASUREMENT)

S43

ACQUIRE HOST VEHICLE POSITION AT FIRST TIME

S44

CALCULATE TARGET POSITION AT FIRST TIME

S45

ACQUIRE HOST VEHICLE POSITION AT SECOND TIME

S46

CALCULATE TARGET POSITION AT SECOND TIME

S47

CALCULATE TARGET SPEED FROM TARGET POSITIONS AT FIRST AND SECOND TIMES

END

Europäisches
Patentamt
European
Patent Office
Office européen
des brevets

# EUROPEAN SEARCH REPORT

**Application Number**

EP 24 19 1128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/154460 A1 (BABA KOZO [JP] ET AL) 4 June 2015 (2015-06-04) * the whole document * | 1-15 | INV. G06V20/58 G06V10/26 |
| A | US 2020/189467 A1 (KONDO KATSUHIKO [JP] ET AL) 18 June 2020 (2020-06-18) * the whole document * | 1-15 | |
| A | US 2014/029008 A1 (HIRAI HIDEAKI [JP] ET AL) 30 January 2014 (2014-01-30) * the whole document * | 1-15 | |

TECHNICAL FIELDS
SEARCHED (IPC)

G06V

The present search report has been drawn up for all claims

| Place of search | Date of completion of the search | Examiner |
|---|---|---|
| The Hague | 5 December 2024 | Grigorescu, Cosmin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 1128

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2024

| Patent document cited in search report | Publication date | Patent family member(s) | Publication date |
|---|---|---|---|
| US 2015154460 A1 | 04-06-2015 | CN 104584076 A | 29-04-2015 |
| | | JP 5943084 B2 | 29-06-2016 |
| | | JP WO2014033936 A1 | 08-08-2016 |
| | | US 2015154460 A1 | 04-06-2015 |
| | | WO 2014033936 A1 | 06-03-2014 |
| US 2020189467 A1 | 18-06-2020 | JP 6686988 B2 | 22-04-2020 |
| | | JP 2019041334 A | 14-03-2019 |
| | | US 2020189467 A1 | 18-06-2020 |
| | | WO 2019044185 A1 | 07-03-2019 |
| US 2014029008 A1 | 30-01-2014 | EP 2692593 A2 | 05-02-2014 |
| | | JP 2014044196 A | 13-03-2014 |
| | | US 2014029008 A1 | 30-01-2014 |

EPO FORM P0459

For more details about this annex : see Official Journal of the European Patent Office, No. 12/82

**REFERENCES CITED IN THE DESCRIPTION**

**Patent documents cited in the description**

- JP 2016085487 A

- JP 2021174288 A